# EUROPÄISCHE PATENTANMELDUNG

(11) **EP 1 681 801 A1**
(43) Veröffentlichungstag der Anmeldung: **19.07.2006**
(21) Anmeldenummer: 05000538.8
(22) Anmeldetag: 12.01.2005
(51) Int. Cl.: H04L 12/28

(54) **Verfahren und Basisstation zum Betreiben eines WiMAX-Systems**

(71) Anmelder: SIEMENS AKTIENGESELLSCHAFT, 80333 München (DE)
(72) Erfinder: Riegel, Maximilian, 90409 Nürnberg (DE)

(57) **Zusammenfassung**

Die Erfindung betrifft ein Verfahren zum Betreiben eines Funkkommunikationssystems, bei dem zur Nachrichtenübertragung von einer Basisstation an Teilnehmerstationen ein Frequenzband verwendet wird. Auf dem Frequenzband wird in einer ersten Zeitspanne eine erste Signalisierungsnachricht (HEADER 1) unter Verwendung eines ersten Funkübertragungsverfahren und in einer zweiten Zeitspanne eine zweite Signalisierungsnachricht (HEADER 2) unter Verwendung eines zweiten Funkübertragungsverfahren gesendet. Die erste (HEADER 1) und die zweite (HEADER 2) Signalisierungsnachricht enthalten Informationen (DL-MAP, UL-MAP) über die Zuweisung von Funkressourcen an Teilnehmerstationen. Weiterhin betrifft die Erfindung eine Basisstation zur Durchführung des Verfahrens.

## Beschreibung

Die Erfindung betrifft ein Verfahren und eine Basisstation zum Betreiben eines Funkkommunikationssystems, insbesondere eines WiMAX-Systems.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen, oder netzseitige Funkeinrichtungen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Unter dem Begriff WiMAX (Worldwide Interoperability for Microwave Access) wird derzeit mit IEEE 802.16 ein relativ junger Funkstandard vorwiegend für lokale Funknetze erarbeitet. WiMAX soll die mobile Nutzung des Internet und der multimedialen Breitbandkommunikation unterstützen und als Alternative zu DSL (Digital Subscriber Line) zum Einsatz kommen. Standardgemäß kann WiMAX im Frequenzbereich unterhalb 11 GHz betrieben werden, für den Einsatz ohne Richtfunkantennen eignet sich insbesondere der Frequenzbereich unterhalb 6 GHz. In diesem Frequenzbereich weist eine WiMAX Basisstation bzw. die mit einer WiMAX Basisstation kommunizierenden Teilnehmerstationen einen Abdeckungsbereich von einigen Kilometern auf. Gegenüber den bekannten zellularen Mobilfunkkommunikationssystemen zeichnet sich WiMAX aufgrund der großen Bandbreite durch eine höhere Datenrate, sowie durch eine auf IP (Internet Protocol) basierende Übertragung von Daten aus.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Der Erfindung liegt die Aufgabe zugrunde, ein effizientes Verfahren zum Betreiben eines Funkkommunikationssystems aufzuzeigen. Weiterhin soll eine Basisstation zur Durchführung des Verfahrens vorgestellt werden.

Diese Aufgabe wird durch ein Verfahren mit den Merkmalen des Anspruchs 1 und durch eine Basisstation mit Merkmalen eines nebengeordneten Anspruchs gelöst. Vorteilhafte Ausgestaltungen und Weiterbildungen sind Gegenstand von Unteransprüchen.

Bei dem Verfahren zum Betreiben eines Funkkommunikationssystems wird zur Nachrichtenübertragung von einer Basisstation an Teilnehmerstationen ein Frequenzband verwendet. Auf diesem Frequenzband wird von der Basisstation in einer ersten Zeitspanne eine erste Signalisierungsnachricht unter Verwendung eines ersten Funkübertragungsverfahrens gesendet, und eine zweite Signalisierungsnachricht unter Verwendung eines zweiten Funkübertragungsverfahrens. Die beiden Signalisierungsnachrichten enthalten Informationen über eine Zuweisung von Funkressourcen an Teilnehmerstationen.

Es kommen zwei verschiedene Funkübertragungsverfahren zum Einsatz. Diese können sich z.B. hinsichtlich der Kodierung der Daten oder der Modulation der Daten voneinander unterscheiden. Insbesondere kann es sich um verschiedene OFDM-Verfahren, z.B. OFDM-Verfahren (OFDM: Orthogonal Frequency Division Multiplex) mit einer unterschiedlichen Breite der Subträger bei gleicher gesamter Frequenzbreite für alle Subträger, handeln. Erfolgt die Versendung einer Nachricht unter Verwendung eines bestimmten Funkübertragungsverfahrens, so werden die Daten der Nachricht senderseitig entsprechend den Vorgaben des Funkübertragungsverfahrens bearbeitet und zur Versendung vorbereitet.

Eine erste Signalisierungsnachricht wird von der Basisstation in einer ersten Zeitspanne versendet, und eine zweite Signalisierungsnachricht wird von der Basisstation in zweiten, von der ersten Zeitspanne verschiedenen Zeitspanne gesendet. Die beiden Signalisierungsnachrichten werden auf dem gleichen Frequenzband, d.h. unter Verwendung der gleichen Funkfrequenzen gesendet. Vorzugsweise verwendet die Basisstation während der ersten Zeitspanne ausschließlich das erste Funkübertragungsverfahren, und während der zweiten Zeitspanne ausschließlich das zweite Funkübertragungsverfahren.

Die Signalisierungsnachrichten informieren über die Zuweisung von Funkressourcen, insbesondere von Zeitschlitzen, an Teilnehmerstationen. Dieser Inhalt der Signalisierungsnachrichten ist vorzugsweise an alle Teilnehmerstationen bzw. an alle aktiven Teilnehmerstationen adressiert.

In Weiterbildung der Erfindung wird auf dem Frequenzband oder auf einem Teil des Frequenzbandes von der Basisstation in einer dritten Zeitspanne eine Nachricht mit Informationen für eine einzelne Teilnehmerstation unter Verwendung des ersten Funkübertragungsverfahrens gesendet, und in einer vierten Zeitspanne eine Nachricht mit Informationen für eine einzelne Teilnehmerstation an diese Teilnehmerstation unter Verwendung des zweiten Funkübertragungsverfahrens. Diese Nachrichten können auf dem gesamten Frequenzband gesendet werden, so wie auch die erste und die zweite Signalisierungsnachricht, oder auf einem Teil dieses Frequenzbandes, wie z.B. auf einer eingeschränkten Anzahl an Subträgern des Frequenzbandes. Die Zusammensetzung der Subträger kann sich bei den beiden Nachrichtenversendungen an einzelne Teilnehmerstationen voneinander unterscheiden. Wird nur ein Teil des Frequenzbandes zur Nachrichtenversendung an eine einzelne Teilnehmerstation verwendet, so kann ein anderer Teil zur Nachrichtenversendung an eine andere Teilnehmerstation verwendet werden. Vorzugsweise verwendet die Basisstation während der dritten Zeitspanne ausschließlich das erste Funkübertragungsverfahren, und während der vierten Zeitspanne ausschließlich das zweite Funkübertragungsverfahren, so dass Zeiten existieren, während welchen die Basisstation Nachrichten an Teilnehmerstationen unter Verwendung des ersten Funkübertragungsverfahrens sendet, und andere Zeiten, während welchen die Basisstation Nachrichten an Teilnehmerstationen unter Verwendung des zweiten Funkübertragungsverfahrens sendet. Die Nachrichtenversendung an einzelne Teilnehmerstationen erfolgt mit Vorzug auf die Ressourcenzuweisung der ersten oder der zweiten Signalisierungsnachricht hin, d.h. gemäß den Angaben bezüglich der Ressourcenverteilung der ersten oder der zweiten Signalisierungsnachricht. Besonders vorteilhaft ist es, wenn für die Versendung einer Nachricht an eine einzelne Teilnehmerstation in der dritten oder vierten Zeitspanne das gleiche Funkübertragungsverfahren verwendet wird, wie für die jeweilige Signalisierungsnachricht, welche die Funkressourcenvergabe für diese dritte oder vierte Zeitspanne ankündigt.

In Ausgestaltung der Erfindung werden wiederkehrende Zeitrahmen für die Nachrichtenversendung von der Basisstation an Teilnehmerstationen verwendet, wobei diese Zeitrahmen die erste, die zweite, die dritte und die vierte Zeitspanne umfassen. Hierbei überlappen die vier Zeitspannen nicht. Vorzugsweise bezieht sich die Funkressourcenvergabe der ersten und der zweiten Zeitspanne auf die Nachrichtenübertragung der dritten und vierten Zeitspanne.

Einer Weiterbildung der Erfindung gemäß wird auf dem Frequenzband oder auf einem Teil des Frequenzbandes oder auf einem anderen Frequenzband in einer fünften Zeitspanne mindestens eine Nachricht durch die Basisstation von mindestens einer Teilnehmerstation unter Verwendung des ersten Funkübertragungsverfahrens empfangen, und in einer sechsten Zeitspanne wird von mindestens einer Teilnehmerstation unter Verwendung des zweiten Funkübertragungsverfahrens. Der Empfang einer Nachricht unter Verwendung eines bestimmten Funkübertragungsverfahrens beinhaltet die Verarbeitung von empfangenen Daten gemäß den Vorgaben des Funkübertragungsverfahrens, wobei die Nachricht gemäß diesem Funkübertragungsverfahren versendet wurde. Wird für die beschriebene Versendung von Nachrichten in Aufwärtsrichtung, d.h. von Teilnehmerstationen zu der Basisstation, zumindest teilweise das gleiche Frequenzband verwendet, welches auch für die Versendung der Signalisierungsnachrichten in Abwärtsrichtung eingesetzt wird, handelt es sich um ein TDD-System (TDD: Time Division Duplex).

Wird hingegen ein anderes, nicht überlappendes Frequenzband verwendet, handelt es sich um ein FDD-System (FDD: Frequency Division Duplex). Vorzugsweise empfängt die Basisstation während der ersten Zeitspanne ausschließlich Nachrichten des ersten Funkübertragungsverfahrens, und während der zweiten Zeitspanne ausschließlich Nachrichten des zweiten Funkübertragungsverfahrens, so dass Zeiten für den Empfang von Nachrichten des ersten Funkübertragungsverfahrens reserviert sind, und andere Zeiten für den Empfang von Nachrichten des zweiten Funkübertragungsverfahrens. Die Nachrichtenversendungen der Teilnehmerstationen erfolgen vorzugsweise auf erfolgte Funkressourcenzuweisungen der ersten und zweiten Signalisierungsnachricht hin, d.h. gemäß den Angaben der Signalisierungsnachrichten bezüglich der Funkressourcenvergabe. Für die Versendung von Nachrichten durch Teilnehmerstationen wird in diesem Fall insbesondere dasjenige Funkübertragungsverfahren verwendet, welcher für die jeweilige die Funkressourcenvergabe enthaltende Signalisierungsnachricht eingesetzt wird.

Einer Ausgestaltung der Erfindung gemäß wird auf dem Frequenzband oder auf einem anderen Frequenzband in einer siebten Zeitspanne mindestens eine Nachricht durch die Basisstation von mindestens einer Teilnehmerstation unter Verwendung des ersten Funkübertragungsverfahrens empfangen, und in einer achten Zeitspanne mindestens eine Nachricht von mindestens einer Teilnehmerstation unter Verwendung des zweiten Funkübertragungsverfahrens. Die Nachrichten der siebten und der achten Zeitspanne betreffen Anforderungen von Funkressourcen. Für die Anforderungen von Funkressourcen wird entweder das gesamte Frequenzband verwendet, auf welchem die Signalisierungsnachrichten gesendet werden, oder ein anderes, mit diesem nicht überlappendes Frequenzband.

In Ausgestaltung der Erfindung werden wiederkehrende Zeitrahmen für die Nachrichtenversendung von Teilnehmerstationen an die Basisstation verwendet, wobei diese Zeitrahmen die fünfte, die sechste, die siebte und die achte Zeitspanne umfassen. Hierbei überlappen die vier Zeitspannen nicht. Vorzugsweise bezieht sich die Funkressourcenvergabe der ersten und der zweiten Zeitspanne auf die Nachrichtenübertragung der fünften und sechsten Zeitspanne.

Die erfindungsgemäße Basisstation weist auf:
Mittel zur Versendung einer ersten Signalisierungsnachricht auf einem Frequenzband in einer ersten Zeitspanne unter Verwendung eines ersten Funkübertragungsverfahrens,
Mittel zur Versendung einer zweiten Signalisierungsnachricht auf dem Frequenzband in einer zweiten Zeitspanne unter Verwendung eines zweiten Funkübertragungsverfahrens.
Die Signalisierungsnachrichten enthalten Informationen über eine Zuweisung von Funkressourcen an Teilnehmerstationen.

Weiterhin kann die erfindungsgemäße Basisstation umfassen:
Mittel zum Empfangen von mindestens einer Nachricht auf dem Frequenzband oder auf einem Teil des Frequenzbandes oder auf einem anderen Frequenzband von mindestens einer Teilnehmerstation in einer dritten Zeitspanne unter Verwendung des ersten Funkübertragungsverfahrens,
Mittel zum Empfangen von mindestens einer Nachricht auf dem Frequenzband oder auf einem Teil des Frequenzbandes oder auf einem anderen Frequenzband von mindestens einer Teilnehmerstation in einer vierten Zeitspanne unter Verwendung des zweiten Funkübertragungsverfahrens.

Die erfindungsgemäße Basisstation eignet sich insbesondere zur Durchführung des erfindungsgemäßen Verfahrens, wobei dies auch auf die Ausgestaltungen und Weiterbildungen zutreffen kann. Hierzu kann sie weitere geeignete Mittel aufweisen.

Im folgenden wird die Erfindung anhand eines Ausführungsbeispiels näher erläutert. Dabei zeigen:
- Figur 1:: einen Ausschnitt aus einem Funkkommunikationssystem nach dem Standard WiMAX,
- Figur 2:: einen Zeitrahmenaufbau gemäß der Erfindung.

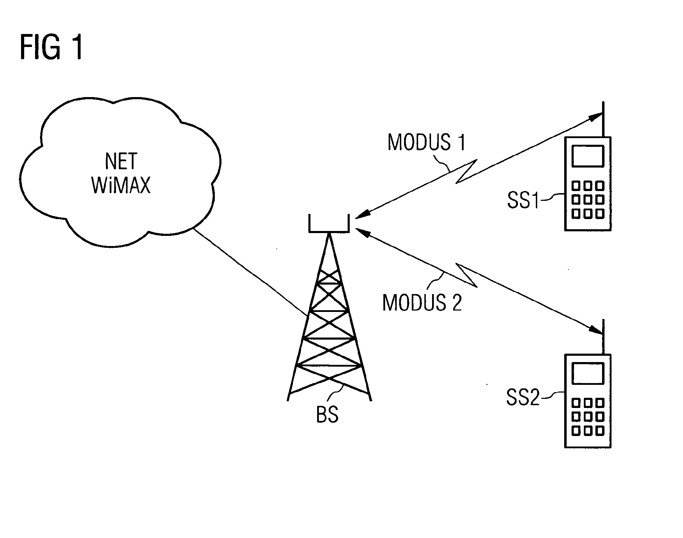

Figur 1 zeigt einen Ausschnitt aus einem Funkkommunikationssystem gemäß dem Standard WiMAX bzw. IEEE 802.16, beschrieben z.B. in
IEEE 802.16, IEEE Standard for Local and metropolitan area networks, Part 16: Air Interface for Fixed Broadband Wireless Access Systems, 1 October 2004,
und
IEEE P802.16e/D5, Draft IEEE Standard for Local and metropolitan area networks, Part 16: Air Interface for Fixed and Mobile Broadband Wireless Access Systems, Amendment for Physical and Medium Access Control Layers for Combined Fixed and Mobile Operation in Licensed Bands, September 2004,
und
Intel® Technology Journal, WiMAX, Volume 08, Issue 03, August 20, 2004, ISSN 1535-864X.

Die Basisstation BS, welche Anschluss an weitere netzseitige Einrichtungen NET WiMAX aufweist, kommuniziert per Funk mit den Teilnehmerstationen SS 1 und SS 2 (SS: Subscriber Station). Bei den Teilnehmerstationen SS 1 und SS 2 kann es sich z.B. um mobile Telefone oder mobile Computer, oder auch um fixe Endgeräte handeln. Mit der Teilnehmerstation SS 1 kommuniziert die Basisstation BS unter Verwendung eines ersten Funkübertragungsverfahrens MODUS 1, mit der Teilnehmerstation SS 2 unter Verwendung eines zweiten Funkübertragungsverfahrens MODUS 2. Gemäß IEEE 802.16 sind mehrere verschiedene Arten von Modulationsverfahren möglich, welche auf dem gleichen MAC-Rahmen basieren. Hierbei handelt es sich für den Bereich unter 11 GHz um die Verwendung einer Trägerfrequenz (Single Carrier), OFDM mit 256 Subträgern (OFDM-256), OFDM mit 2048 Subträgern (OFDM-2048), sowie SOFDM (Scalable OFDM, hierbei ist die Anzahl an verwendeten Subträgern variabel). Diese verschiedenen Funkübertragungsverfahren sind nicht zueinander kompatibel, da eine Teilnehmerstation, welche eine unter Verwendung eines Funkübertragungsverfahrens gesendete Nachricht demodulieren kann, in der Regel eine andere unter Verwendung eines anderen Funkübertragungsverfahrens gesendete Nachricht, nicht demodulieren kann. D.h. in der Regel sind die Teilnehmerstationen lediglich in der Lage, Nachrichten eines Funkübertragungsverfahrens zu interpretieren bzw. verstehen.

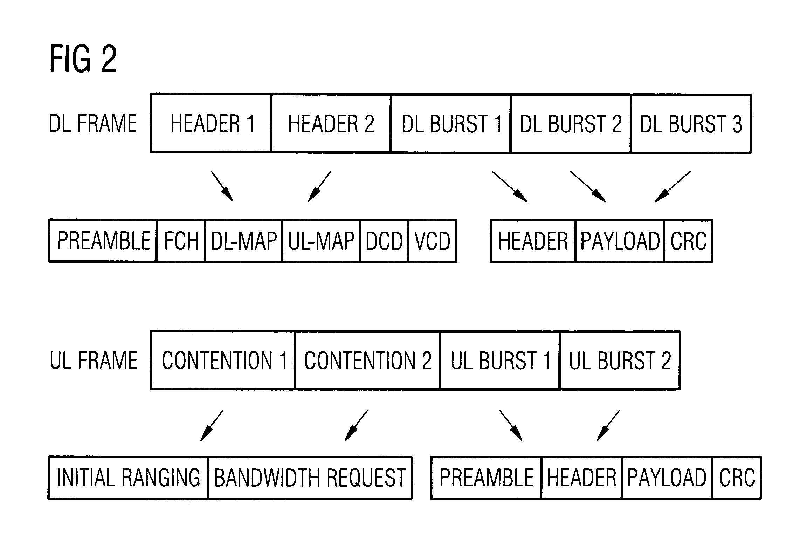

Der zur Kommunikation zwischen der Basisstation BS und den Teilnehmerstation SS 1 und SS 2 verwendete MAC-Rahmen (MAC:
Medium Access Control) ist in Figur 2 dargestellt. Die Rahmenstruktur von IEEE 802.16 ist TDMA-basiert, d.h. es existieren Zeitschlitze, welche Teilnehmerstationen zugewiesen werden. Es existiert ein Zeitrahmen DL FRAME (DL: Downlink) für die Versendung von Nachrichten durch die Basisstation an Teilnehmerstationen und ein Zeitrahmen UL FRAME (UL: Uplink) für die Versendung von Nachrichten durch Teilnehmerstationen an die Basisstation. Für die beiden Zeitrahmen DL FRAME und
UL FRAME kann ein gemeinsames Frequenzband zur Verfügung stehen, hierbei handelt es sich um die TDD-Betriebsweise eines IEEE 802.16 Systems. Alternativ können bei der FDD-Betriebsweise eines IEEE 802.16 Systems für die beiden Zeitrahmen DL FRAME und UL FRAME jeweils ein eigenes Frequenzband zur Verfügung stehen. Die Erfindung ist sowohl auf die TDD-Betriebsweise als auch auf die FDD-Betriebsweise anwendbar.

In Figur 2 dienen die Benennungen innerhalb der einzelnen Zeitabschnitte der Zeitrahmen DL FRAME und UL FRAME sowohl der Bezeichnung der Zeitabschnitte oder Felder als auch der Nachrichten, welche in diesen Zeitabschnitten oder Feldern übertragen werden. Die in Figur 2 dargestellten Zeitabschnitten können voneinander unterschiedliche Längen aufweisen.

Zu Beginn des Zeitrahmens DL FRAME wird ein erstes Signalisierungskopfteil HEADER 1 durch die Basisstation versendet. Das Signalisierungskopfteil HEADER 1 wird unter Verwendung eines ersten Modulationsverfahrens, z.B. OFDM-256 erstellt und versendet. Im Anschluss wird ein zweites Signalisierungskopfteil HEADER 2 versendet, wobei hierzu ein zweites Modulationsverfahren, z.B. S-OFDM, verwendet wird. Gemäß diesem Beispiel versteht eine Teilnehmerstation, welche empfangene Nachrichten gemäß OFDM-256 demoduliert, den Inhalt des Signalisierungskopfteils HEADER 1, nicht aber den Inhalt des Signalisierungskopfteils HEADER 2. Umgekehrtes gilt für eine Teilnehmerstation, welche empfangene Nachrichten gemäß S-OFDM demoduliert. Die Signalisierungskopfteile HEADER 1 und HEADER 2 werden jeweils unter exklusiver Nutzung des Frequenzbandes versendet.

Die beiden Signalisierungskopfteile HEADER 1 und HEADER 2 sind gemäß der genaueren Darstellung unterhalb der Signalisierungskopfteile HEADER 1 und HEADER 2 gleich aufgebaut: zu Beginn steht eine Präambel PREAMBLE, gefolgt von einem Feld FCH (FCH: Frame Control Header), den Feldern DL-MAP und UL-MAP, gefolgt von den Feldern DCD (DCD: Downlink Channel Descriptor) und UCD (UCD: Uplink Channel Descriptor). Die Präambel PREAMBLE ermöglicht den Teilnehmerstationen die Synchronisierung auf die von der Basisstation gesendeten Signale. Das Feld FCH spezifiziert das Burst-Profil und die Länge von Bursts, welche dem Feld FCH folgen. Die Felder DCD und UCD beinhalten weitere Signalisierungsinformationen. Das Feld DL-MAP beinhaltet Informationen an die Teilnehmerstationen über die Zuweisung von Zeitschlitzen für den Empfang von Nachrichten, d.h. die Ressourcenverteilung in Abwärtsrichtung, während das Feld UL-MAP Informationen an die Teilnehmerstationen beinhaltet über die Zuweisung von Zeitschlitzen für die Versendung von Nachrichten, d.h. die Ressourcenverteilung in Aufwärtsrichtung. Die Funkressourcenzuweisungen beziehen sich auf den aktuellen Zeitrahmen DL FRAME bzw. den darauf folgenden Zeitrahmen UL FRAME. Es kann beispielsweise die Angabe erfolgen, dass einer bestimmten Teilnehmerstation eine bestimmte Untermenge der Subträger des Frequenzbandes innerhalb eines bestimmten Zeitschlitzes zugewiesen sind.

Im Anschluss an die beiden Signalisierungskopfteile HEADER 1 und HEADER 2 folgen Zeitschlitze DL BURST 1, DL BURST 2 und DL BURST 3 zur Versendung von Informationen durch die Basisstation an Teilnehmerstationen. Bei diesen Informationen handelt es sich um Informationen, welche im Gegensatz zu den Informationen der Signalisierungskopfteile HEADER 1 und HEADER 2 für einzelne Teilnehmerstationen bestimmt sind. Sie können für die einzelnen Teilnehmerstationen bestimmte Signalisierungsinformationen und Nutzinformationen enthalten. Die Ressourcenzuweisung der Felder DL-MAP der Signalisierungskopfteile HEADER 1 und HEADER 2 beziehen sich auf diese Zeitschlitze DL BURST 1, DL BURST 2 und DL BURST 3. Für die Zeitschlitze DL BURST 1, DL BURST 2 und DL BURST 3 wird jeweils nur eines der Modulationsverfahren verwendet, und zwar dasjenige, welches für das Signalisierungskopfteil HEADER 1 oder HEADER 2 verwendet wurde, durch welches eine Zuweisung des jeweiligen Zeitschlitzes DL BURST 1, DL BURST 2 und DL BURST 3 erfolgt ist. So kann beispielsweise für das Signalisierungskopfteil HEADER 1 ein erstes Modulationsverfahren verwendet werden, und durch das Feld DL-MAP des Signalisierungskopfteiles HEADER 1 wird das gesamte Frequenzband oder Subbänder des Frequenzbandes während dem Zeitschlitz DL BURST 1 an Teilnehmerstationen vergeben. In diesem Fall wird für die Versendung von Nachrichten an die in dem Feld DL-MAP des Signalisierungskopfteiles HEADER 1 angezeigten Teilnehmerstationen während dem Zeitschlitz DL BURST 1 auch das erste Modulationsverfahren verwendet. Aus den Informationen des Feldes DL-MAP und DCD des jeweiligen Signalisierungskopfteiles HEADER 1 oder HEADER 2 ist den Teilnehmerstationen bekannt, wann ein Zeitschlitz beginnt, für welchen ihnen das Frequenzband oder Subbänder des Frequenzbandes zugewiesen ist bzw. sind.

Da die Präamblen PREAMBLE der Signalisierungskopfteile HEADER 1 und HEADER 2 den Teilnehmerstationen als Zeitreferenz gelten, erfolgt die Versendung der Signalisierungskopfteile HEADER 1 und HEADER 2 immer an der gleichen Position innerhalb des Zeitrahmens DL FRAME. Anstelle der in Figur 2 dargestellten kann eine andere Positionierung der Signalisierungskopfteile HEADER 1 und HEADER 2 innerhalb des Zeitrahmens DL FRAME verwendet werden, die Positionierung der Signalisierungskopfteile HEADER 1 und HEADER 2 zu Beginn des Zeitrahmens DL FRAME ermöglicht jedoch die größte Flexibilität für die Aufteilung des Restes des Zeitrahmens DL FRAME.

Die in den Zeitschlitzen DL BURST 1, DL BURST 2 und DL BURST 3 von der Basisstation gesendeten Nachrichten weisen gemäß der genaueren Darstellung unterhalb der Zeitschlitze DL BURST 1, DL BURST 2 und DL BURST 3 den folgenden Aufbau auf: zu Beginn steht jeweils ein Kopfteil HEADER, welches Typ- und Steuerinformationen enthält, sowie die Länge der Nachricht, die logische Kanalnummer zur Unterscheidung verschiedener Datenströme zur selben Teilnehmerstation und eine Prüfsumme für die Header-Informationen, gefolgt von den für die jeweilige Teilnehmerstation bestimmten Informationen PAYLOAD, gefolgt von einem Feld zur Fehlerüberprüfung CRC (CRC: Cyclic Redundancy Check).

Im folgenden wird die Aufwärtsrichtung betrachtet. Zu Beginn des Zeitrahmens UL FRAME stehen den Teilnehmerstationen die Zeitspannen CONTENTION 1 und CONTENTION 2 zur Verfügung. Die Zeitspannen CONTENTION 1 und CONTENTION 2 bestehen gemäß der genaueren Darstellung unterhalb der Zeitspannen CONTENTION 1 und CONTENTION 2 aus den Feldern INITIAL RANGING und BANDWIDTH REQUEST. Das Feld INITIAL RANGING dient dem Abgleich des Sendeteils, betreffend z.B. Sendeleistung und Laufzeitausgleich, vor dem erstmaligen Übertragen von Informationen nach erfolgter Funkressourcenzuweisung. In dem Feld BANDWIDTH REQUEST können die Teilnehmerstationen bei der Basisstation die exklusive Zuweisung eines Übertragungs-Zeitschlitzes anfordern.

Für die Versendung von Nachrichten innerhalb der Zeitspanne CONTENTION 1 wird das gleiche Modulationsverfahren verwendet wie für das Signalisierungskopfteil HEADER 1, ebenso wird innerhalb der Zeitspanne CONTENTION 2 das gleiche Modulationsverfahren verwendet wie für das Signalisierungskopfteil HEADER 2. Die Lage der Zeitspannen CONTENTION 1 und CONTENTION 2 ist den Teilnehmerstationen bekannt.

Nach Ablauf der Zeitspannen CONTENTION 1 und CONTENTION 2 folgen die Zeitschlitze UL BURST 1 und UL BURST 2. Diese können von denjenigen Teilnehmerstationen, welchen in den Signalisierungskopfteilen HEADER 1 und HEADER 2 Zeitschlitze für die Versendung von Nachrichten zugewiesen wurden, zur Versendung von Nachrichten genutzt werden. Die in den Zeitschlitzen UL BURST 1 und UL BURST 2 gesendeten Nachrichten weisen gemäß der genaueren Darstellung unterhalb der Zeitschlitze UL BURST 1 und UL BURST 2 den folgenden Aufbau auf: zu Beginn steht eine Präambel PREAMBLE zu Synchronisierungszwecken, gefolgt von einem Signalisierungskopfteil HEADER, welches den in Bezug auf das Signalisierungskopfteil HEADER der Zeitschlitze DL BURST 1, DL BURST 2 und DL BURST 3 beschriebenen Zwecken dient.

Im Anschluss folgen die Informationen PAYLOAD, welche eine Teilnehmerstation zu versenden wünscht, gefolgt von einem Feld zur Fehlerüberprüfung CRC. Für die Zeitschlitze UL BURST 1 und UL BURST 2 wird jeweils nur eines der Modulationsverfahren verwendet, und zwar dasjenige, welches für das Signalisierungskopfteil HEADER 1 oder HEADER 2 verwendet wurde, durch welches eine Zuweisung des jeweiligen Zeitschlitzes UL BURST 1 und UL BURST 2 erfolgt ist.

Ein erstes Funkübertragungsverfahren wird somit verwendet für den Signalisierungskopfteil HEADER 1, den oder die Zeitschlitze in Abwärtsrichtung, welche durch den Signalisierungskopfteil HEADER 1 an Teilnehmerstationen zugewiesen werden, die Zeitspanne CONTENTION 1, und den oder die Zeitschlitze in Aufwärtsrichtung, welche durch den Signalisierungskopfteil HEADER 1 an Teilnehmerstationen zugewiesen werden. Entsprechend wird ein zweites Funkübertragungsverfahren verwendet für den Signalisierungskopfteil HEADER 2, den oder die Zeitschlitze in Abwärtsrichtung, welche durch den Signalisierungskopfteil HEADER 2 an Teilnehmerstationen zugewiesen werden, die Zeitspanne CONTENTION 2, und den oder die Zeitschlitze in Aufwärtsrichtung, welche durch den Signalisierungskopfteil HEADER 2 an Teilnehmerstationen zugewiesen werden. Es findet keine Vermischung der Funkübertragungsverfahren innerhalb der beschriebenen Zeitschlitze statt, jeder dieser Zeitschlitze wird entweder für das erste oder das zweite Funkübertragungsverfahren eingesetzt.

Der beschriebene erfindungsgemäße Aufbau der MAC-Rahmen für die Aufwärts- und die Abwärtsrichtung gewährleistet, dass keine Überlagerung von Nachrichten, welche mit unterschiedlichen Funkübertragungsverfahren gesendet werden, entsteht. Hierdurch ist eine Koexistenz mehrerer unterschiedlicher Funkübertragungsverfahren auf einem gemeinsamen Frequenzband möglich, wobei die Basisstation die mehreren Funkübertragungsverfahren zeitlich gegeneinander verschoben verwendet, während Teilnehmerstationen jeweils lediglich eines der Modulationsverfahren einsetzen.

Die Zuordnung der Abwärtszeitschlitze DL BURST 1, DL BURST 2 und DL BURST 3, sowie der Aufwärtszeitschlitze UL BURST 1 und UL BURST 2 zu den verschiedenen Funkübertragungsverfahren ist nicht fix. Auf diese Weise kann eine flexible Zuweisung der Funkressourcen an die Funkstationen, welche in der Regel jeweils nur ein Funkübertragungsverfahren beherrschen, erzielt werden. Die Zuordnung der Abwärtszeitschlitze DL BURST 1, DL BURST 2 und DL BURST 3, sowie der Aufwärtszeitschlitze UL BURST 1 und UL BURST 2 zu den verschiedenen Funkübertragungsverfahren erfolgt vorzugsweise abhängig von den Ressourcenanforderungen der Teilnehmerstationen. Kommunizieren beispielsweise aktuell eine Vielzahl von Teilnehmerstationen mit der Basisstation, welche das erste, jedoch nicht das zweite Funkübertragungsverfahren beherrschen, so wird die Mehrheit der Zeitschlitze in Aufwärts- und Abwärtsrichtung für das erste Funkübertragungsverfahren eingesetzt.

Für die Versendung von Nachrichten durch eine Basisstation steht somit gemäß der Erfindung ein Frequenzband zur Verfügung. Dieses Frequenzband wird zur Versendung von Nachrichten unter Verwendung zweier unterschiedlicher Funkübertragungsverfahren genutzt. Für jedes Funkübertragungsverfahren existiert ein Signalisierungskopfteil u.a. mit Informationen über die Funkressourcenzuweisung, sowie einer oder mehrere Zeitschlitze zur Versendung von Informationen an Teilnehmerstationen nach erfolgter Ressourcenzuweisung für diese Zeitschlitze. Auch für den Empfang von Nachrichten durch eine Basisstation steht gemäß der Erfindung ein Frequenzband zur Verfügung, wobei es sich um das gleiche Frequenzband wie das zur Versendung von Nachrichten durch die Basisstation genutzte Frequenzband handeln kann, oder auch um ein anderes Frequenzband. In Bezug auf das zum Empfang von Nachrichten durch die Basisstation genutzte Frequenzband existiert für jedes Funkübertragungsverfahren ein Zeitabschnitt, in welchem sich die Teilnehmerstationen um Funkressourcen bewerben können. Weiterhin existiert für jedes Funkübertragungsverfahren einer oder mehrere Zeitschlitze zur Versendung von Informationen durch Teilnehmerstationen nach erfolgter Ressourcenzuweisung für diese Zeitschlitze.

Die Zeitschlitze, welche für das erste Funkübertragungsverfahren genutzt werden, und die Zeitschlitze, welche für das zweite Funkübertragungsverfahren genutzt werden, sind auf einem gemeinsamen Frequenzband ineinander verschachtelt (englisch: interleaved). Dies resultiert verglichen mit dem alternativen Fall, dass für jedes Funkübertragungsverfahren ein eigenes Frequenzband eingesetzt wird, zu einer Einsparung von Funkressourcen.

Die Länge der Zeitrahmen DL FRAME und UL FRAME können sich voneinander unterscheiden, insbesondere kann, wie in Figur 2 dargestellt, der Zeitrahmen DL FRAME länger sein als der Zeitrahmen UL FRAME.

Während die Erfindung anhand des Beispiels der Verwendung zweier Funkübertragungsverfahren erläutert wurde, kann sie auch auf eine größere Anzahl an verschiedenen Funkübertragungsverfahren angewendet werden. Weiterhin ist die Erfindung nicht auf den Einsatz in einem WiMAX-System beschränkt.

## Patentansprüche

1. Verfahren zum Betreiben eines Funkkommunikationssystems, bei dem
zur Nachrichtenübertragung von einer Basisstation (BS) an Teilnehmerstationen (SS 1, SS 2) ein Frequenzband verwendet wird, auf welchem von der Basisstation (BS) in einer ersten Zeitspanne eine erste Signalisierungsnachricht (HEADER 1) unter Verwendung eines ersten Funkübertragungsverfahrens (MODUS 1) und in einer zweiten Zeitspanne eine zweite Signalisierungsnachricht (HEADER 2) unter Verwendung eines zweiten Funkübertragungsverfahrens (MODUS 2) gesendet wird,
wobei die erste (HEADER 1) und die zweite (HEADER 2) Signalisierungsnachricht Informationen (DL-MAP, UL-MAP) über eine Zuweisung von Funkressourcen an Teilnehmerstationen (SS 1, SS 2) enthalten.

2. Verfahren nach Anspruch 1, bei dem
auf dem Frequenzband oder auf einem Teil des Frequenzbandes von der Basisstation (BS) in einer dritten Zeitspanne (DL BURST 1, DL BURST 2, DL BURST 3) eine Nachricht mit Informationen für eine einzelne Teilnehmerstation (SS 1, SS 2) von der Basisstation (BS) an diese Teilnehmerstation (SS 1, SS 2) unter Verwendung des ersten Funkübertragungsverfahrens (MODUS 1) und in einer vierten Zeitspanne (DL BURST 1, DL BURST 2, DL BURST 3) eine Nachricht mit Informationen für eine einzelne Teilnehmerstation (SS 1, SS 2) von der Basisstation (BS) an diese Teilnehmerstation (SS 1, SS 2) unter Verwendung des zweiten Funkübertragungsverfahrens (MODUS 2) gesendet wird.

3. Verfahren nach Anspruch 2, bei dem
wiederkehrende Zeitrahmen (DL FRAME) für die Nachrichtenübertragung von der Basisstation (BS) an Teilnehmerstationen (SS 1, SS 2) verwendet werden, welche die erste Zeitspanne, die zweite Zeitspanne, die dritte Zeitspanne (DL BURST 1, DL BURST 2, DL BURST 3) und die vierte Zeitspanne (DL BURST 1, DL BURST 2, DL BURST 3) umfassen.

4. Verfahren nach einem der Ansprüche 1 bis 3, bei dem
auf dem Frequenzband oder auf einem Teil des Frequenzbandes oder auf einem anderen Frequenzband in einer fünften Zeitspanne (UL BURST 1, UL BURST 2) mindestens eine Nachricht durch die Basisstation (BS) von mindestens einer Teilnehmerstation (SS 1, SS 2) unter Verwendung des ersten Funkübertragungsverfahrens (MODUS 1) und in einer sechsten Zeitspanne (UL BURST 1, UL BURST 2) mindestens eine Nachricht durch die Basisstation (BS) von mindestens einer Teilnehmerstation (SS 1, SS 2) unter Verwendung des zweiten Funkübertragungsverfahrens (MODUS 2) empfangen wird.

5. Verfahren nach einem der Ansprüche 1 bis 4, bei dem
auf dem Frequenzband oder auf einem anderen Frequenzband in einer siebten Zeitspanne (CONTENTION 1, CONTENTION 2) mindestens eine Nachricht durch die Basisstation (BS) von mindestens einer Teilnehmerstation (SS 1, SS 2) unter Verwendung des ersten Funkübertragungsverfahrens (MODUS 1) und in einer achten Zeitspanne (CONTENTION 1, CONTENTION 2) mindestens eine Nachricht durch die Basisstation (BS) von mindestens einer Teilnehmerstation (SS 1, SS 2) unter Verwendung des zweiten Funkübertragungsverfahrens (MODUS 2) empfangen wird, wobei die Nachrichten der siebten und achten Zeitspanne (CONTENTION 1, CONTENTION 2) Anforderungen von Funkressourcen betreffen.

6. Verfahren nach Anspruch 4 oder 5, bei dem
wiederkehrende Zeitrahmen (UL FRAME) für die Nachrichtenübertragung von Teilnehmerstationen (SS 1, SS 2) an die Basisstation (BS) verwendet werden, welche die fünfte Zeitspanne(UL BURST 1, UL BURST 2), die sechste Zeitspanne (UL BURST 1, UL BURST 2), die siebte Zeitspanne (CONTENTION 1, CONTENTION 2) und die achte Zeitspanne (CONTENTION 1, CONTENTION 2) umfassen.

7. Verfahren nach einem der Ansprüche 1 bis 6, bei dem
es sich bei dem ersten und dem zweiten Funkübertragungsverfahren (MODUS 1, MODUS 2) um verschiedene Modulationsverfahren handelt.

8. Verfahren nach einem der Ansprüche 1 bis 7, bei dem
es sich bei dem Funkkommunikationssystem um ein WiMAX-System handelt.

9. Basisstation (BS) zur Kommunikation mit Teilnehmerstationen (SS 1, SS 2) in einem Funkkommunikationssystem, mit Mitteln zur Versendung einer ersten Signalisierungsnachricht (HEADER 1) in einer ersten Zeitspanne unter Verwendung eines ersten Funkübertragungsverfahrens (MODUS 1) auf einem Frequenzband, und
Mitteln zur Versendung einer zweiten Signalisierungsnachricht (HEADER 2) in einer zweiten Zeitspanne unter Verwendung eines zweiten Funkübertragungsverfahrens (MODUS 2) auf dem Frequenzband,
wobei die erste (HEADER 1) und die zweite (HEADER 2) Signalisierungsnachricht Informationen (DL-MAP, UL-MAP) über eine Zuweisung von Funkressourcen an Teilnehmerstationen (SS 1, SS 2) enthalten.

10. Basisstation (BS) nach Anspruch 9, mit
Mitteln zum Empfangen von mindestens einer Nachricht von mindestens einer Teilnehmerstation (SS 1, SS 2) in einer dritten Zeitspanne (UL BURST 1, UL BURST 2, CONTENTION 1, CONTENTION 2) auf dem Frequenzband oder auf einem Teil des Frequenzbandes oder auf einem anderen Frequenzband unter Verwendung des ersten Funkübertragungsverfahrens (MODUS 1), und
Mitteln zum Empfangen von mindestens einer Nachricht von mindestens einer Teilnehmerstation (SS 1, SS 2) in einer vierten Zeitspanne (UL BURST 1, UL BURST 2, CONTENTION 1, CONTENTION 2) auf dem Frequenzband oder auf einem Teil des Frequenzbandes oder auf dem anderen Frequenzband unter Verwendung des zweiten Funkübertragungsverfahrens (MODUS 2.
